# EUROPEAN PATENT SPECIFICATION

(11) **EP 2 327 594 B1**
(45) Date of publication and mention of the grant of the patent: **09.04.2014**
(21) Application number: 10190519.8
(22) Date of filing: 09.11.2010
(51) Int. Cl.: B60R 25/00, B62H 5/00, E05B 17/18, E05B 47/00

(54) **Protective device for vehicle locking device, vehicle locking mechanism, and saddle-type vehicle**
Schutzvorrichtung und Fahrzeugverriegelungsvorrichtung, Fahrzeugverriegelungsmechanismus und Motorrad
Dispositif de protection pour dispositif de verrouillage de véhicule, mécanisme de verrouillage de véhicule et véhicule à monture à selle

(30) Priority: 27.11.2009 JP 2009270177
(43) Date of publication of application: 01.06.2011
(73) Proprietor: Yamaha Hatsudoki Kabushiki Kaisha, Shizuoka-ken Shizuoka 438-8501 (JP)
(72) Inventor: Suita, Yoshikazu, Shizuoka-ken Shizuoka 438-8501 (JP)
(74) Representative: Stöckeler, Ferdinand

(56) References cited:
- WO-A1-2007/088765
- WO-A1-2009/054395
- JP-A- 2008 101 372

## Description

### TECHNICAL FIELD

The present invention relates to a protective device for a vehicle locking device, a vehicle locking mechanism, and a saddle-type vehicle.

### BACKGROUND ART

There are known in the art devices for a vehicle locking device, configured so that a key insertion hole is opened or closed by a shutter. For example, according to a vehicle locking device disclosed in patent reference 1, a shutter is provided so as to be capable of rotating between a closed position, in which an opening of a cover portion is closed, and an opened position, in which the opening is opened. A magnetic locking part is provided to the shutter, and the shutter is held in the closed position by the magnet locking part. A tab portion is provided integrally on the shutter. A user can use a magnetic key to unlock the magnet locking part and move the shutter from the closed position to the opened position. The user can operate the tab portion to move the shutter from the opened position to the closed position.

According to a device for a cylinder lock, a torsion spring urges the shutter towards a blocked position. A push button is provided as a body that is separate from the shutter, and holds the shutter at an opened position. The user can press the push button to release the hold on the shutter. When the push button is used to release the hold on the shutter, the urging force of the torsion spring automatically moves the shutter to the blocked position.

### [Prior art reference]

### [Patent reference]

[Patent reference 1] JP-A 2002-81244
[Patent reference 2] JP-A 2003-239581

WO 2007/088765 A1 which is considered as the closest prior art, describes a protection device of a cylinder-lock capable of switching between a state where a mechanical key can be inserted into a key hole provided by an inner cylinder and a state where the mechanical key cannot be inserted into the key hole. A cylinder body includes a shutter mechanism having an insertion hole for admitting the insertion of a mechanical key into a key hole, a turning member turning coaxially with the turning axis of an inner cylinder according to the turning operation at unlocking of a magnet lock, and a shutter plate interlocked and connected with the turning member so as to move between an open position and a close position.

### SUMMARY OF THE INVENTION

An object of the present invention is to provide a protective device for a vehicle locking device in which the shutter cannot be readily forced open and that has a simple structure; a vehicle locking mechanism; and a saddle-type vehicle.

This object is achieved by a protective device according to claim 1.

A protective device for protecting a vehicle locking device according to the present invention is a protective device for protecting a vehicle locking device including a key hole into which a key is inserted, and the protective device comprising a housing, a cover, a shutter, a holding mechanism, and an operating member. The housing includes an opening on a portion that corresponds to the key hole. The cover covers the housing and has a cylindrical shape. The cover includes an opening on a portion that corresponds to the opening of the housing. The shutter is disposed in a space between the housing and the cover so as to be moved between a closed position, in which the opening of the cover is closed, and an opened position, in which the opening of the cover is opened. The holding mechanism holds the shutter in the closed position. The operating member is a body that is separate from the shutter. The operating member rotates along an inner peripheral surface of the cover while making contact with the shutter, thereby moving the shutter from the opened position to the closed position.

### [Advantageous Effects of Invention]

According to the protective device for a vehicle locking device of the present invention, the operating member is a body separate to the shutter. Therefore, in an instance where a large force is applied to the operating member, the operating member breaks, thereby making it difficult to force the shutter open. The operating member also rotates along an inner peripheral surface of the cover while making contact with the shutter, thereby moving the shutter from the opened position to the closed position. Therefore, the rotating motion of the operating member can be made stable, and the structure for moving the shutter can be made simple.

In contrast to the invention, in a structure where a tab portion is provided integrally with a shutter, such as in the vehicle locking device disclosed in patent reference 1, the shutter may be forced open on a strong force being applied to the tab portion. A structure where a push button is provided as a separate body to the shutter, such as in the device for protecting a cylinder lock disclosed in patent reference 2, has a complex structure and an increased number of components. The cost of manufacture may therefore increase.

### BRIEF DESCRIPTION OF THE DRAWINGS

FIG. 1 is an external perspective view of a protective device for a vehicle locking device.
FIG. 2 is an exploded perspective view of the protective device.
FIG. 3 is a side cross-section view of the protective device.
FIG. 4 is a perspective view showing a vehicle locking mechanism having the protective device and a vehicle locking device.
FIG. 5 is a top view of a housing.
FIG. 6 is a top view of a cover.
FIG. 8 is a top view of an operating member.
FIG. 9 is a drawing showing a state in which the housing, the operating member, and the shutter are assembled.
FIG. 10 is a top view of a plate member.
FIG. 11 is a transparent top view of the protective device in which the shutter is in an opened position.
FIG. 12 is a transparent top view of the protective device in which the shutter is in a closed position.
FIG. 13 is a top view and a side view of a magnetic key.
FIG. 14 is a top view of the protective device according to another embodiment.
FIG. 15 is a side cross-section view of the protective device according to another embodiment.
FIG. 16 is a drawing showing an operation of the protective device according to another embodiment.
FIG. 17 is a vehicle locking mechanism according to another embodiment.
FIG. 18 is a side view of a motorcycle provided with the vehicle locking device and the protective device.

### Description of Embodiments

### 1. Configuration

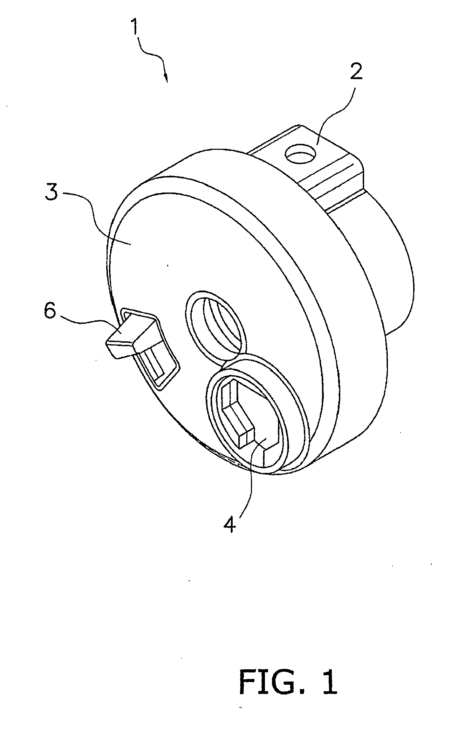

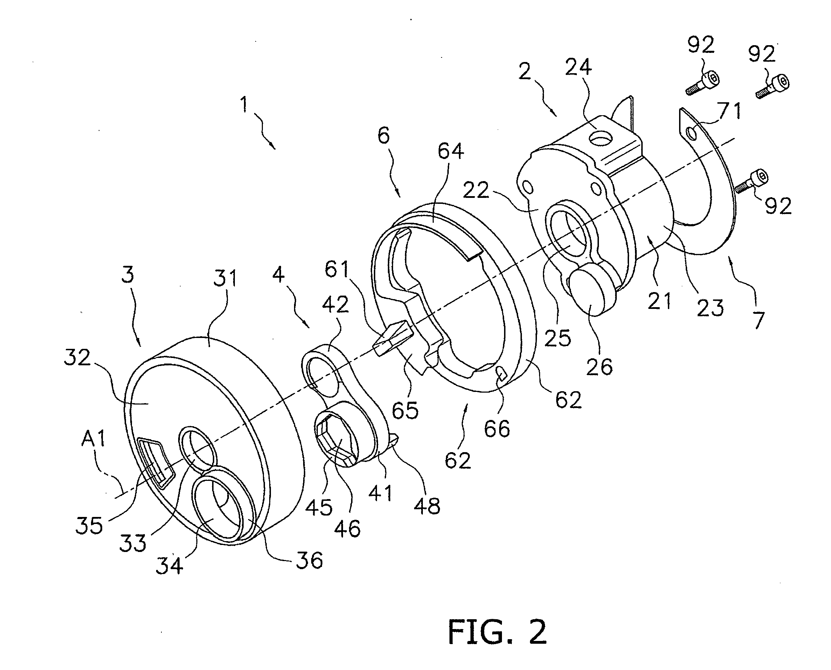

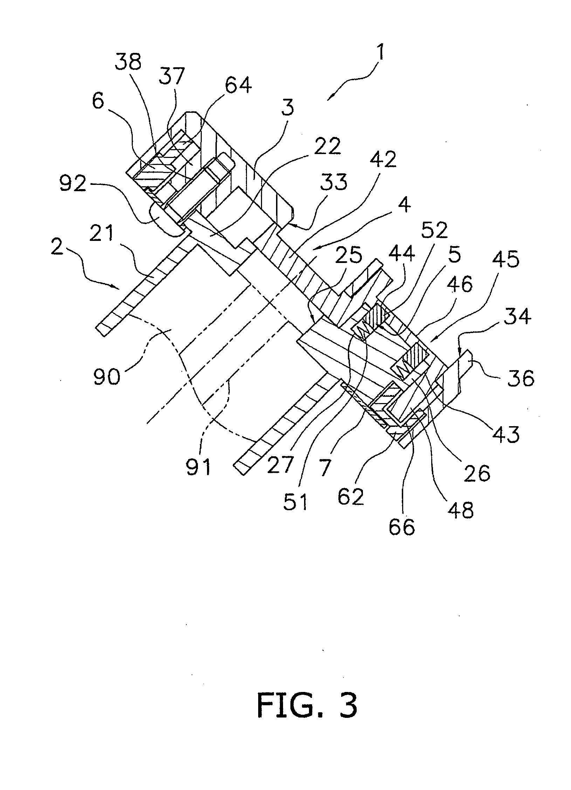

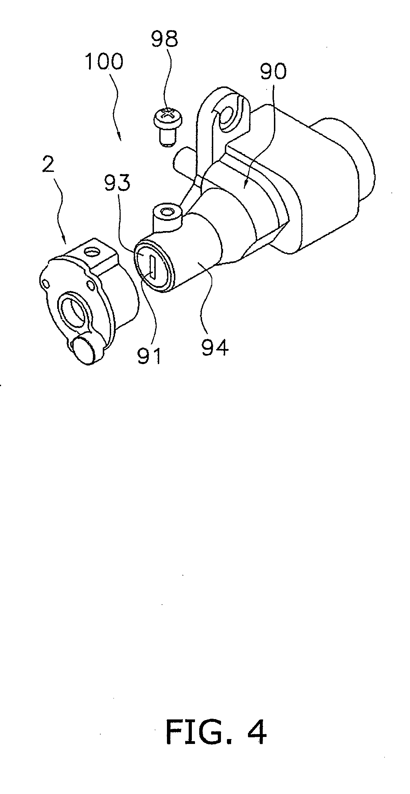

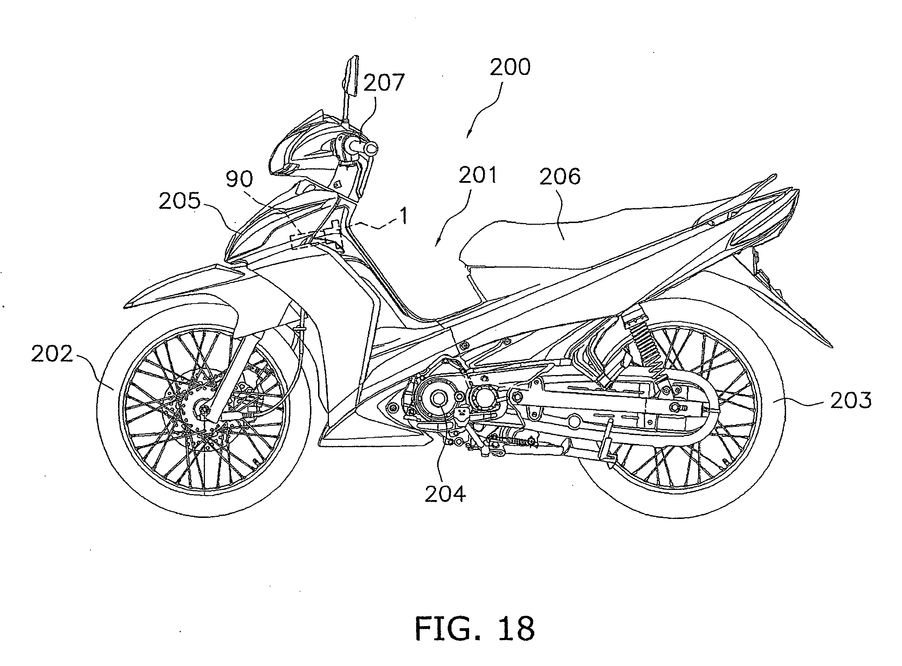

A protective device 1 for a vehicle locking device according to an embodiment of the present invention is shown in FIGS. 1 through 3. As shown in FIG. 4, the protective device 1 is a device for protecting a vehicle locking device 90 such as a cylinder lock, and constitutes a vehicle locking mechanism 100 together with the vehicle locking device 90. The vehicle locking device 90 has a key hole 91 into which a key is inserted. Specifically, the vehicle locking device 90 has a cylinder 93 and a locking device housing 94. The key hole 91 is provided to the cylinder 93. The locking device housing 94 accommodates the cylinder 93. The protective device 1 externally covers and protects the key hole 91. The protective device 1 and the vehicle locking device 90 are provided to a motorcycle or another saddle-type vehicle 200, as shown in FIG. 18. The saddle-type vehicle 200 comprises a main vehicle body 201, a front wheel 202, a rear wheel 203, the vehicle locking device 90, and the protective device 1. The main vehicle body 201 has a power unit 204, a frame (not shown), a vehicle body cover 205, a seat 206, a handlebar 207, and other components. The front wheel 202 and the rear wheel 203 are rotatably attached to the main vehicle body 201. The protective device 1 and the vehicle locking device 90 are provided to the main vehicle body 201.
As shown in FIGS. 1 through 3, the protective device 1 comprises a housing 2, a cover 3, a shutter 4, a holding mechanism 5 (see FIG. 3), an operating member 6, and a plate member 7. In the following description, as shown in FIG. 2, a direction along a central axis A1 that passes through the housing 2, the cover 3, and the operating member 6 from the housing 2 towards the cover 3 is referred to as "up," and the opposite direction is referred to as "down."

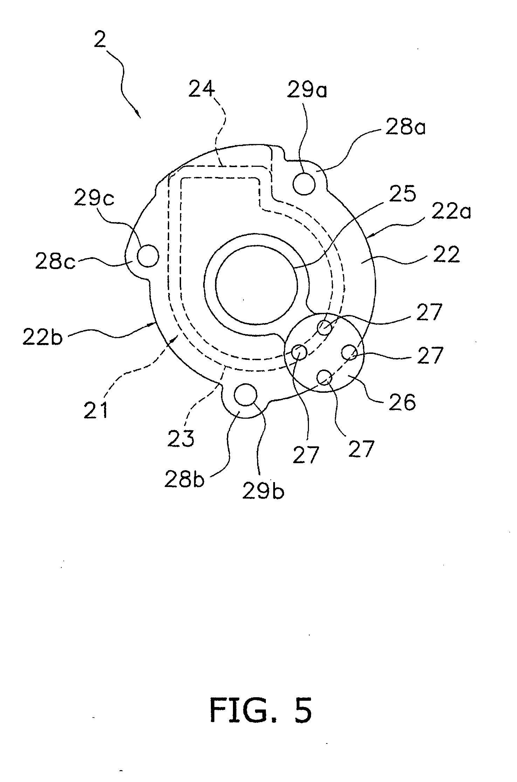

As shown in FIG. 4, the housing 2 is a portion that is attached to the vehicle locking device 90. The housing 2 is formed as a body separate to the locking device housing 94. The cylinder 93 is inserted into the housing 2. More specifically, a portion of the locking device housing 94 in which the cylinder 93 is accommodated is inserted into the housing 2. A screw 98 secures the housing 2 to the locking device housing 94. As shown in FIGS. 2 and 5, the housing 2 includes a side surface portion 21 and an upper surface portion 22. The housing 2 is formed from aluminum, a resin, or another non-magnetic material. The side surface portion 21 and the upper surface portion 22 are formed as an integral unit. The interior of the side surface portion 21 is hollow, and the vehicle locking device 90 is inserted into the interior of the side surface portion 21 (see FIG. 3). The side surface portion 21 includes a cylindrical portion 23 and a convex portion 24. The cylindrical portion 23 has a substantially cylindrical shape. The convex portion 24 is provided so as to protrude sideways from the cylindrical portion 23.

The upper surface portion 22 is a plate-shaped portion provided so as to cover an upper end of the side surface portion 21. The upper surface portion 22 has a profile that is larger than the side surface portion 21 when looked from the direction of the central axis A1. An opening 25 is provided on the upper surface portion 22 at a position that corresponds with the key hole 91 of the vehicle locking device 90. The opening 25 is circular and is positioned substantially in the center of the upper surface portion 22.

A shutter supporting portion 26 is provided on an upper surface of the upper surface portion 22 so as to protrude upwards. The shutter supporting portion 26 is provided lateral to the opening 25. The shutter supporting portion 26 has a cylindrical shape. As shown in FIG. 5, a plurality of circular depressions 27 is provided on an upper surface of the shutter supporting portion 26. Specifically, according to the present embodiment, four depressions 27 are provided. The depressions 27 are positioned in a circular arrangement around the center of the shutter supporting portion 26.

An outer peripheral surface of the upper surface portion 22 is shaped so as to be uneven, and is provided with a plurality of protrusions 28a through 28c. Specifically, according to the present embodiment, three protrusions 28a through 28c are provided. In particular, a first protrusion 28a, a second protrusion 28b, and a third protrusion 28c are provided. Each of the protrusions 28a through 28c has an arc shape. Holes 29a through 29c into which securing screws 92 (described further below) are inserted (see FIG. 2) are provided radially inwards of each of the protrusions 28a though 28c. A portion of the outer peripheral surface of the upper surface portion 22 between the first protrusion 28a and the second protrusion 28b (or a "first outer peripheral portion 22a" hereafter) has an arc shape. A portion of the shutter supporting portion 26 protrudes further radially outwards than the first outer peripheral portion 22a. A portion of the outer peripheral surface of the upper surface portion 22 between the second protrusion 28b and the third protrusion 28c (or a "second outer peripheral portion 22b" hereafter) has an arc shape. The second outer peripheral portion 22b is positioned further radially inwards than other portions of the outer peripheral portion of the upper surface portion 22. The outer peripheral portion of the upper surface portion 22 is shaped so as to be indented radially inwards at the second outer peripheral portion 22b. In the present embodiment, unless specified otherwise, "radially outside" refers to outside in the radial direction centered around the central axis A1, and "radially inside" refers to the side towards the center in the radial direction centered around the central axis A1.

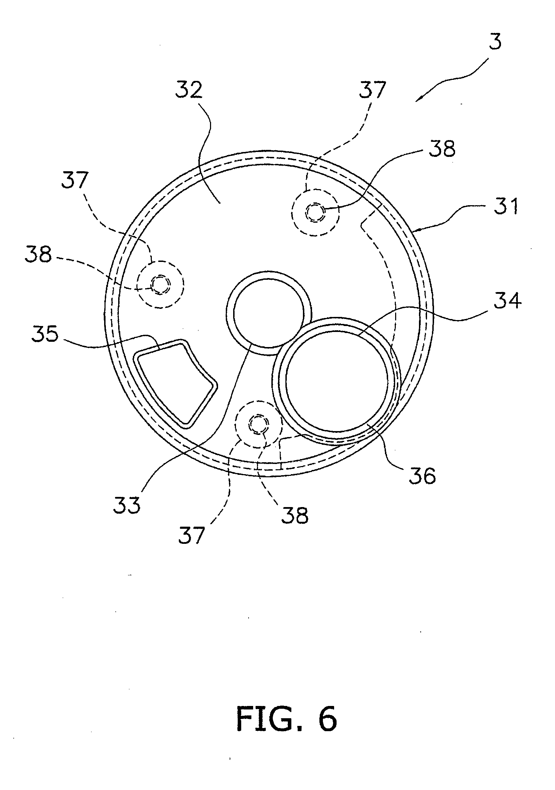

As shown in FIGS. 2 and 6, the cover 3 is a cylindrically shaped member for covering the housing 2 from above. The cover 3 is made from aluminum or another metal, but can also be made from a resin or the like. A side surface portion 31 of the cover 3 covers the exterior of the upper surface portion 22 of the housing 2. A first opening 33, a second opening 34, and a third opening 35 are provided to an upper surface portion 32 of the cover 3.

As shown in FIG. 3, the first opening 33 is provided on a portion of the upper surface portion 32 of the cover 3 that corresponds with the key hole 91; i.e., a portion that corresponds with the opening 25 of the housing 2. The first opening 33 has a circular shape and is disposed at a center of the upper surface portion 32 of the cover 3.

The second opening 34 is provided on a portion of the upper surface portion 32 of the cover 3 that corresponds with a magnetic key insertion portion 45 (described further below) of the shutter 4. The second opening 34 has a circular shape and has a diameter that is larger than that of the first opening 33. The second opening 34 is positioned radially outside of the first opening 33. The periphery of the second opening 34 is covered by a cylindrical portion 36 that protrudes upwards from the upper surface portion 32 of the cover 3. The cylindrical portion 36 may be omitted.

The third opening 35 is shaped so as to extend in an arc shape along the circumferential direction of the upper surface portion 32 of the cover 3. The third opening 35 is provided to a portion of the upper surface portion 32 of the cover 3 that corresponds with the range of movement of an operating portion 61 described further below. The third opening 35 is positioned radially outside of the first opening 33. The position of the third opening 35 is closer to the outer peripheral portion of the upper surface portion 32 of the cover 3 than that of the first opening 33. The third opening 35 is positioned at a distance from the second opening 34 in the circumferential direction.

As shown in FIG. 6, a plurality of bosses 37 is provided on a lower surface of the upper surface portion 32 of the cover 3. The bosses 37 protrude downwards from the lower surface. A screw hole 38, into which a securing screw 92 (described further below) is inserted, is provided on each of the bosses 37.

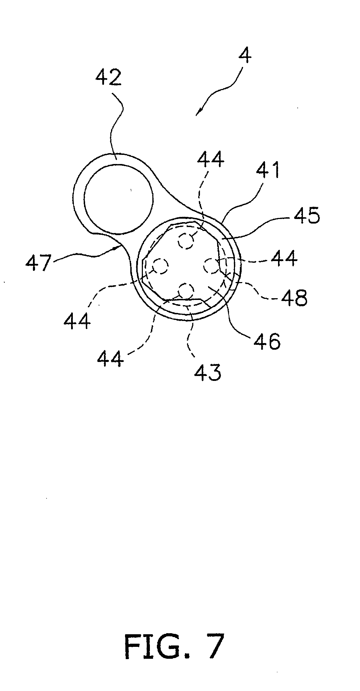

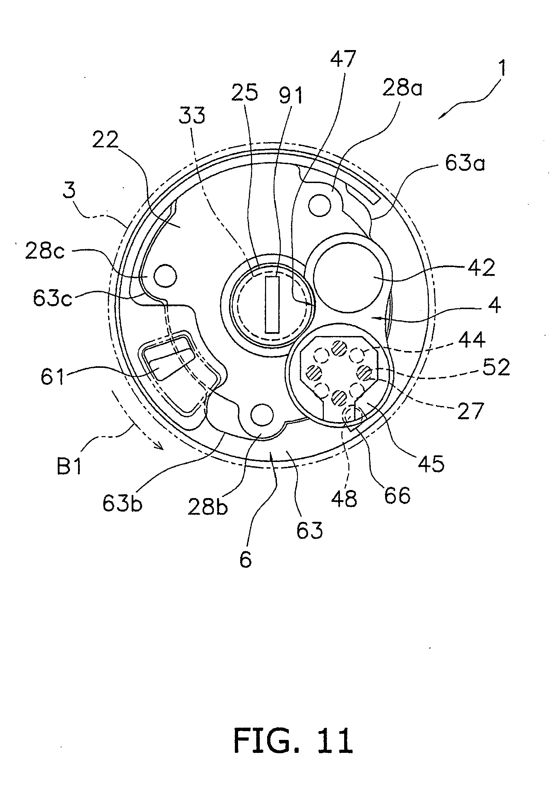

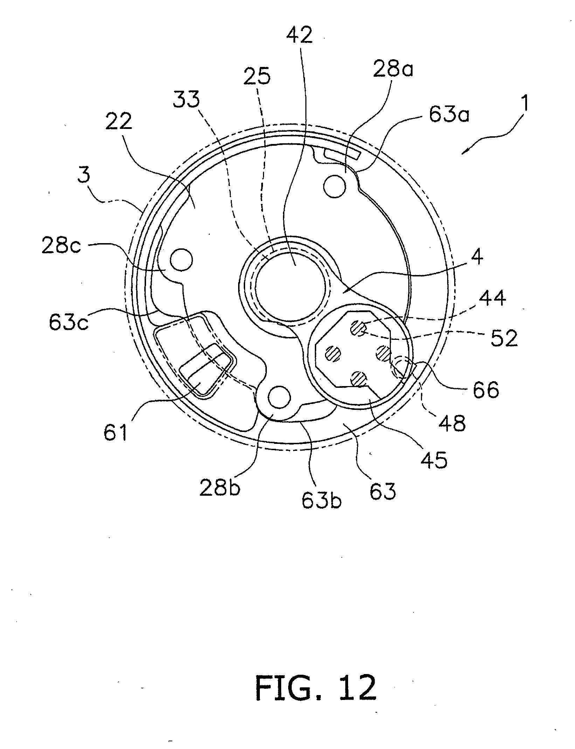

The shutter 4 is provided so as to be capable of rotating on the cover 3. In other words, the shutter 4 is provided so as to be capable of rotating in a space between the housing 2 and the cover 3. The shutter 4 rotates and thereby moves from an opened position, in which the first opening 33 is open (see FIG. 11), to a closed position, in which the first opening 33 is closed (see FIG. 12). The shutter 4 rotates and thereby moves from the closed position to the opened position. As shown in FIGS. 2 through 7, the shutter 4 includes a rotational center portion 41 and a blocking portion 42. The shutter 4 is formed from aluminum, a resin, or another non-magnetic material. The rotational center portion 41 and the blocking portion 42 are formed so as to be integral with each other.

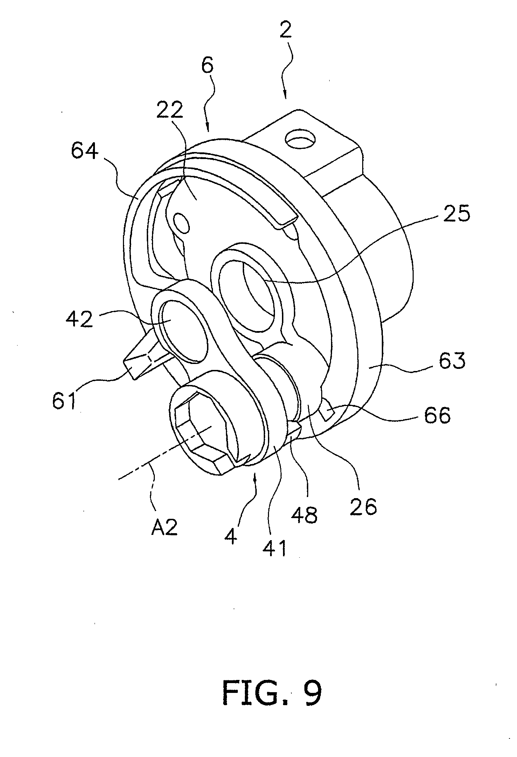

A circular concave portion 43 is provided to a lower surface of the rotational center portion 41. The shutter supporting portion 26 of the housing 2 is inserted into the concave portion 43. The concave portion 43 has a shape that is slightly larger than that of the shutter supporting portion 26 of the housing 2. The shutter 4 is therefore supported so as to be rotatable relative to the shutter supporting portion 26 of the housing 2. As a result, the shutter 4 rotates about a central axis A2 that passes through the center of the concave portion 43 of the rotational center portion 41 and the center of the shutter supporting portion 26 of the housing 2 (see FIG. 9). A plurality of depressions 44 is provided to the concave portion 43. The depressions 44 are provided at positions that correspond to the aforementioned depressions 27 on the shutter supporting portion 26 of the housing 2 when the shutter 4 is in the closed position.

The magnetic key insertion portion 45 is provided on an upper surface of the rotational center portion 41. The magnetic key insertion portion 45 has a cylindrical shape and is inserted into the second opening 34 of the cover 3. The inside diameter of the second opening 34 is slightly larger than the outside diameter of the magnetic key insertion portion 45. The shutter 4 is therefore provided so as to be rotatable relative to the cover 3. A concave portion 46 is provided on an upper surface of the magnetic key insertion portion 45. The concave portion 46 has a shape that matches the outer shape of a magnetic key (described further below).

When the shutter 4 is in the closed position, the blocking portion 42 is located at a position that corresponds with the first opening 33 of the cover 3. The blocking portion 42 thereby closes the first opening 33. When the shutter 4 is in the opened position, the blocking portion 42 is located at a position that does not correspond with the first opening 33 of the cover 3. As a consequence, the blocking portion 42 opens the first opening 33. A side surface 47 of the shutter 4 between the blocking portion 42 and the rotational center portion 41 has a shape that curves so that the shutter 4 avoids the first opening 33 on the cover 3 and the opening 25 on the housing 2 when the shutter 4 is in the closed position (see FIG. 11).

A protrusion 48 (second contact portion) is provided to the lower surface of the rotational center portion 41. The protrusion 48 protrudes downwards from the lower surface. The protrusion 48 is provided on a side opposite the blocking portion 42 relative to the rotational center of the shutter 4. In other words, the rotational center portion 41 is located between the blocking portion 42 and the protrusion 48. The protrusion 48 is located further radially outwards of the magnetic key insertion portion 45 relative to the concave portion 43 on the lower surface of the rotational center portion 41. The protrusion 48 is inserted into a hole 66 on the operating member 6 (described further below).

The holding mechanism 5 shown in FIG. 3 is a mechanism for holding the shutter 4 in the closed position. The magnetic key releases the hold on the shutter 4 maintained by the holding mechanism 5. The holding mechanism 5 includes a plurality of springs 51 and a plurality of lock pins 52. In FIG. 3, the springs and lock pins are labeled in some instances and not in others. Each of the springs 51 and the lock pins 52 is inserted into the depression 27 on the shutter supporting portion 26 of the housing 2. The lock pin 52 is shorter than the depth of the depression 27 on the housing 2, and longer than the depth of the depression 44 on the shutter 4. The lock pin 52 is formed from a magnet. The spring 51 urges the lock pin 52 towards the shutter 4. In other words, the lock pin 52 is pressed against the shutter 4 by the spring 51. When the shutter 4 is in the closed position, the depression 27 on the housing 2 and the depression 44 on the shutter 4 are in a state of corresponding with each other, as shown in FIG. 3. The lock pin 52 is therefore in a state of being inserted into the depression 44 on the shutter 4 by the urging force of the springs 51. The shutter 4 is thereby held in the closed position.

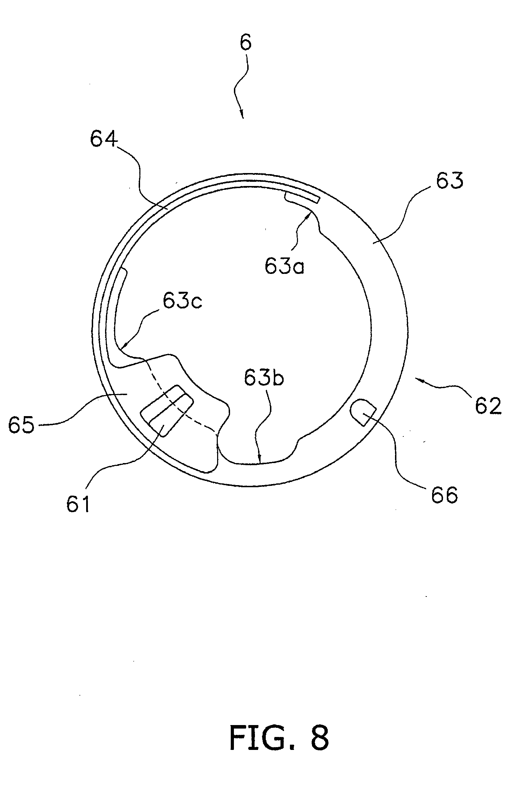

As shown in FIGS. 2 and 8, the operating member 6 is a member that is separate from the shutter 4. The operating member 6 rotates along an inner peripheral surface of the cover 3 while make contact with the shutter 4, thereby moving the shutter 4 from the opened position to the closed position. The operating member 6 includes the operating portion 61 and a main body portion 62. The operating member 6 is formed from a resin. The operating portion 61 and the main body portion 62 are integrally formed with each other.

The operating portion 61 is a portion that protrudes outwards from the third opening 35 on the cover 3. The operating portion 61 has a protruding shape so as to protrude upwards from the main body portion 62.

The main body portion 62 has a circular shape. The main body portion 62 is disposed so as to be concentric with the opening 25 on the housing 2 and the first opening 33 on the cover 3, and is provided so as to be capable of rotating between the inner peripheral surface of the cover 3 and the outer peripheral surface of the housing 2 about the above-mentioned central axis A1. The central axis A1 is different from the above-mentioned central axis A2 of the shutter supporting portion 26 (see FIG. 9). In other words, the rotational central axis A2 of the shutter 4 and the central axis A1 of the main body portion 62 are different from each other, and are positioned at a distance from each other in the radial direction of the main body portion 62. The main body portion 62 includes an annular portion 63, a wall portion 64, and a wide portion 65.

The annular portion 63 is ring-shaped. The upper surface portion 22 of the housing 2 is inserted radially inside the annular portion 63. As shown in FIG. 8, a first concave portion 63a, a second concave portion 63b, and a third concave portion 63c are provided to an inner peripheral surface of the annular portion 63. Each of the first concave portion 63a, the second concave portion 63b, and the third concave portion 63c respectively makes contact with the first protrusion 28a, the second protrusion 28b, and the third protrusion 28c of the housing 2, thereby restricting the movement of the operating member 6 (see FIGS. 11 and 12). The wall portion 64 is provided upright on the annular portion 63. The wall portion 64 is provided so as to protrude to the direction which is along the central axis A1 from an upper surface of the annular portion 63. The wall portion 64 is provided along the circumferential direction of the annular portion 63. The wall portion 64 is of an arc shape. The wide portion 65 is disposed on the annular portion 63 and has a shape that is wider than that of the annular portion 63. The wide portion 65 is connected to the wall portion 64. The operating portion 61 is provided to the wide portion 65. The hole 66 (first contact portion) is provided to a portion on the annular portion 63 where the wall portion 64 and the wide portion 65 are not provided.

As shown in FIG. 9, in a state in which the upper surface portion 22 of the housing 2 is inserted radially inside the annular portion 63, a portion of the shutter supporting portion 26 of the housing 2 is positioned in an overlapping manner above the annular portion 63. The hole 66 on the annular portion 63 is positioned lateral to the shutter supporting portion 26 of the housing 2. In a state in which the shutter supporting portion 26 of the housing 2 is inserted into the concave portion 43 of the shutter 4, the rotational center portion 41 of the shutter 4 is positioned in an overlapping manner above the annular portion 63. Also, the hole 66 on the annular portion 63 is positioned downward of the rotational center portion 41, and the protrusion 48 on the shutter 4 is inserted into the hole 66 on the annular portion 63. Therefore, when the operating member 6 rotates, an edge of the hole 66 of the shutter 4 makes contact with the protrusion 48 of the shutter 4 and causes the shutter 4 to move in a rotating manner. FIG. 9 shows a state in which the operating member 6 has been mounted to the housing 2 and the shutter 4 has been moved from a mounting position in a direction which is along the central axis A2.

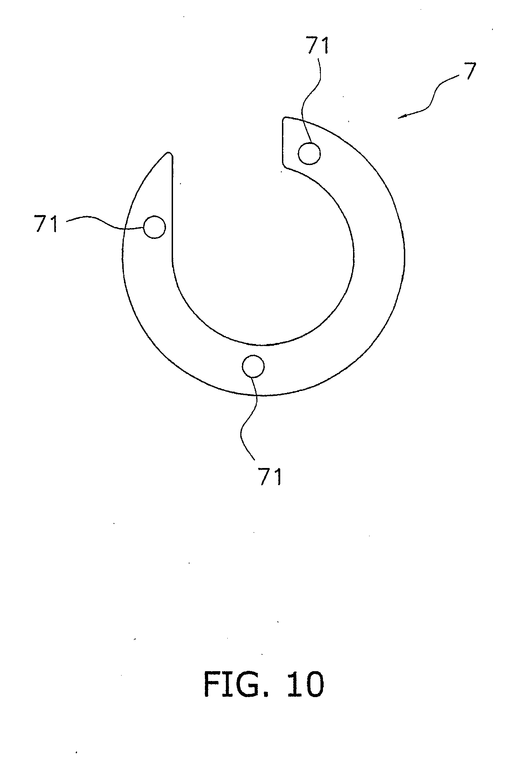

The plate member 7 is a plate-shaped member positioned downward of the upper surface portion 22 of the housing 2. The plate member 7 is formed from a metal. As shown in FIG. 10, the plate member 7 is substantially ring-shaped so that the side surface portion 21 of the housing 2 is inserted radially inside, but has a shape in which a portion has been cut away so as to match the shape of the convex portion 24 of the side surface portion 21. A plurality of holes 71 is provided to the plate member 7. A securing screw 92 shown in FIG. 2 is inserted through each of the holes 71 on the plate member 7, the holes 29 on the housing 2, and the screw holes 38 on the boss 37 of the cover 3, whereby the housing 2 and the cover 3 secures the plate member 7. The operating member 6 positioned between the inner peripheral surface of the cover 3 and the outer peripheral surface of the upper surface portion 22 of the housing 2 is prevented from being displaced.

### 2. Opening and closing operations

The opening and closing operation of the protective device 1 will now be described.

As shown in FIG. 11, the shutter 4 is in the opened position, and the key hole 91 is in an open state. In a state in which the shutter 4 is in the opened position, the blocking portion 42 is withdrawn to a position that does not correspond with the first opening 33 and the opening 25. More specifically, the blocking portion 42 is positioned opposite the operating portion 61 relative to the opening 25. In FIG. 11, the cover 3 is represented by a long dashed double-short dashed line. A portion of the blocking portion 42 is positioned in an overlapping manner above the annular portion 63. The curved side surface 47 of the shutter 4 is disposed along an edge of the opening 25 of the housing 2. In the state described above, the depressions 44 on the shutter 4 and the depressions 27 on the housing 2 are disposed in positions that do not correspond with each other. Therefore, the lock pins 52 are not inserted into the depressions 44 on the shutter 4, and the shutter 4 is not held by the holding mechanism 5. Therefore, the shutter 4 is capable of freely moving in coordination with the movement of the operating member 6. In the state described above, the protrusion 28b on the housing 2 is in contact with one end portion of the second concave portion 63b on the operating member 6. Also, the third protrusion 28c on the housing 2 is in contact with the third concave portion 63c of the operating member 6. As a result, the direction of rotation of the operating member 6 is restricted to one direction. In other words, the operating member 6 can move in a direction that causes the shutter 4 to move from the opened position to the closed position (see arrow B1), but cannot move in the opposite direction. In FIGS. 11 and 12, hatching is applied to the lock pins 52 to aid understanding. The depressions 44 on the shutter 4 and the depressions 27 on the housing 2 are labeled in some instances and not in others.

The operating member 6 moves in a rotatable manner when a user moves the operating portion 61 from a first operating position shown in FIG. 11 towards a second operating position shown in FIG. 12. When the rotating movement of the operating member 6 rotatably moves the hole 66, the edge of the hole 66 pushes and moves the protrusion 48 on the shutter 4. The shutter 4 thereby rotates about the central axis A2 (see FIG. 9) and moves towards the closed position (see arrow B1) .

As shown in FIG. 12, when the operating member 6 moves until the second protrusion 28b of the housing 2 makes contact with the other end portion of the second concave portion 63b of the operating member 6 and the first protrusion 28a of the housing 2 makes contact with the first concave portion 63a of the operating member 6, the operating portion 61 moves to the second operating position and the shutter 4 moves to the closed position. In a state in which the shutter 4 is in the closed position, the blocking portion 42 is in a position that corresponds to the first opening 33 on the cover 3 as well as to the opening 25, and closes the first opening 33 and the opening 25. In the state described above, the depressions 44 on the shutter 4 and the depressions 27 on the housing 2 are disposed in positions that correspond with each other. The lock pins 52 are therefore inserted into the depressions 44 on the shutter 4 by the urging force from the springs 51. The holding mechanism 5 thereby holds the shutter 4. Therefore, in the state described above, the shutter 4 and the operating member 6 are immobilized.

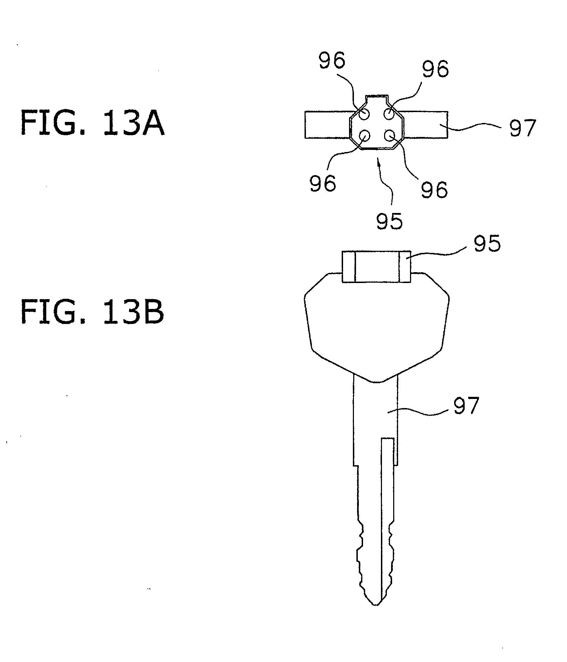

In order to move the shutter 4 from the closed position to the opened position, the user first uses the magnetic key to release the hold on the shutter 4 by the holding mechanism 5. In other words, the user inserts a magnetic key 95 such as one shown in FIG. 13 into the magnetic key insertion portion 45 of the shutter 4. FIG. 13A is a top view of the magnetic key 95, and FIG. 13B is a side view of the magnetic key 95. The magnetic key 95 is provided so as to be integral with a key 97 for inserting into the key hole 91 on the vehicle locking device 90. The magnetic key 95 is provided with a plurality of magnets 96 for generating a repelling force against the lock pins 52. Therefore, the repelling force generated between the magnetic key 95 and the lock pins 52 moves the lock pins 52 towards the housing 2 against the urging force from the springs 51 when the magnetic key 95 is inserted into the magnetic key insertion portion 45 of the shutter 4. The lock pins 52 are thereby withdrawn from the depressions 44 on the shutter 4, and the hold on the shutter 4 is released. The user can therefore turn the magnetic key 95 to move the shutter 4 from the closed position to the opened position. When the user uses the magnetic key 95 to move the shutter 4 from the closed position to the opened position, the operating member 6 rotates in a direction opposite to that described above, and the operating portion 61 returns from the second operating position to the first operating position.

### 3. Characteristics

(1) In the protective device 1 for a vehicle locking device according to the present embodiment, the operating portion 61 is a body that is separate from the shutter 4. Therefore, in an instance where a large force is applied to the operating portion 61, the protrusion 48 snaps, or the operating member 6 otherwise breaks, thereby preventing the movement of the operating member 6 from being transmitted to the shutter 4. It is therefore made difficult to force the shutter 4 open. Also, the operating member 6 rotates along the inner peripheral surface of the cover 3 while making contact with the shutter 4, thereby causing the shutter 4 to rotate. The shutter 4 thereby moves from the opened position to the closed position. Therefore, the structure for moving the shutter 4 can be made simple. Even in an instance where the operating member 6 is broken, the user can use the magnetic key 95 to readily open or close the shutter 4.

(2) In the protective device 1 for a vehicle locking device according to the present embodiment, contact is maintained between the concave portions 63a through 63c on the inner peripheral surface of the annular portion 63, and the protrusions 28a through 28c on the outer peripheral surface of the housing 2, thereby restricting the movement of the operating member 6. The movement of the operating member 6 can therefore be restricted using a simple configuration.

(3) In the protective device 1 for a vehicle locking device according to the present embodiment, the wall portion 64 is provided to the operating member 6. Therefore, the operating member 6 can be positioned in a stable manner, so as not to move erratically.

(4) In the protective device 1 for a vehicle locking device according to the present embodiment, the protrusion 48 is provided to the rotational center portion 41 of the shutter 4, the protrusion 48 being provided to the side opposite to the blocking portion 42 relative to the rotational center of the shutter 4. The rotating movement of the operating member 6 is transmitted through the protrusion 48 to the shutter 4, thereby moving the blocking portion 42. Therefore, the distance of movement of the operating portion 61 for moving the blocking portion 42 can be reduced. The ease with which the operating portion 61 is operated can thereby be increased.

(5) In the protective device 1 for a vehicle locking device according to the present embodiment, the operating member 6 is provided so as to rotate between the inner peripheral surface of the cover 3 and the outer peripheral surface of the housing 2, obviating the need for a shaft for rotatably supporting the operating member 6, and a structure for supporting the shaft. The structure of the protective device 1 can thereby be made simple.

(6) In the protective device 1 for a vehicle locking device according to the present embodiment, the operating member 6 is formed so as to have a circular shape having a large shape approximating the inside diameter of the cover 3. The operating portion 61 is positioned in the vicinity of the outer peripheral portion of the operating member 6. The angle of movement of the operating portion 61 for moving the blocking portion 42 can therefore be reduced. The ease with which the operating portion 61 is operated can thereby be increased.

(7) In the protective device 1 for a vehicle locking device according to the present embodiment, the operating portion 61 is a body that is separate from the shutter 4. Therefore, the degree of freedom regarding the layout of the operating portion 61 is greater than when the operating portion 61 is provided so as to be integral with the shutter 4. In other words, in an instance where the operating member 6 is provided so as to be integral with the shutter 4, the position of the operating portion 61 is restricted to the vicinity of the shutter 4. When the operating portion 61 is a body separate to the shutter 4, the operating portion 61 can be positioned at a distance from the shutter 4.

### 4. Other embodiments

Although a description has been given above with regards to an embodiment of the present invention, the present invention is not limited in scope to the above embodiment; a variety of modifications may be made without departing from the spirit of the invention.

(a) The protective device 1 may be configured so that after the operating portion 61 is moved from the first operating position to the second operating position and the shutter 4 moved to the closed position, the operating portion 61 automatically returns from the second operating position to the first operating position while the shutter 4 remains in the closed position.

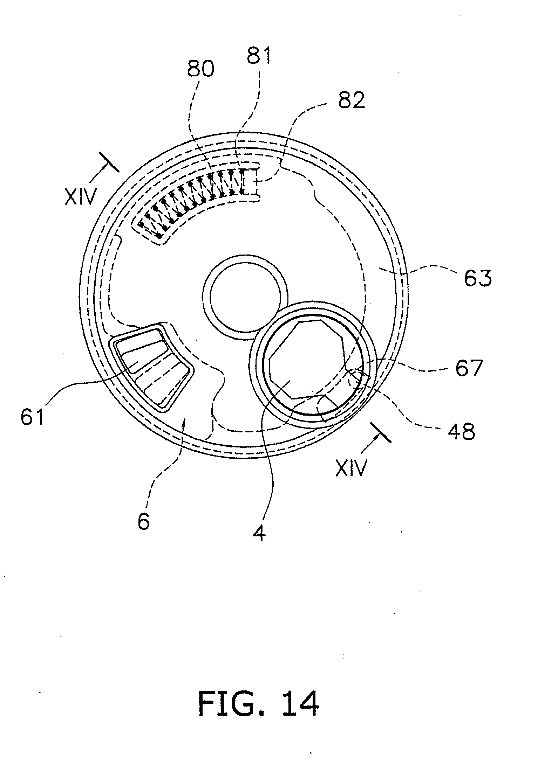

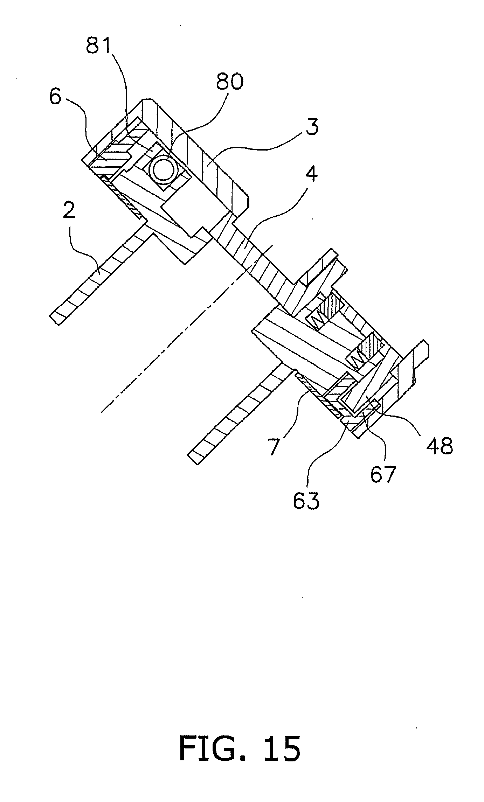

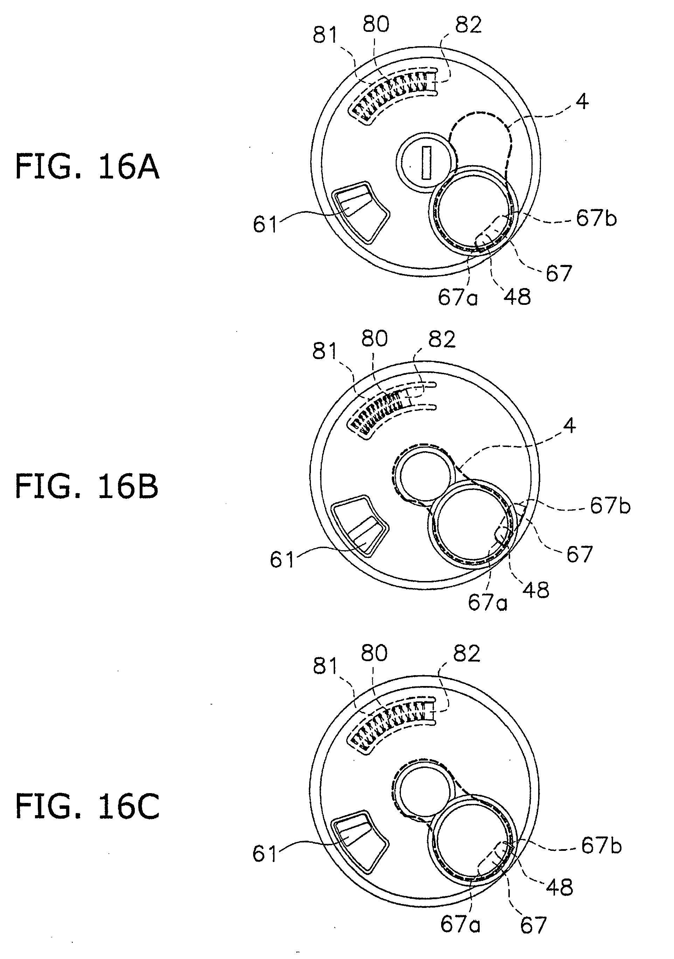

For example, as shown in FIGS. 14 and 15, an elongate hole 67 is provided to the annular portion 63 of the operating member 6. The elongate hole 67 is shaped so as to extend in the circumferential direction of the annular portion 63. The protrusion 48 on the shutter 4 is inserted into the elongate hole 67. As the operating member 6 rotates, the elongate hole 67 moves from a predetermined first position to a second position while an edge of the elongate hole 67 maintains contact with the protrusion 48, thereby moves the shutter 4 from the opened position to the closed position. An elastic member 80 is provided to the protective device 1. The elastic member 80 is, for example, a spring. The elastic member 80 urges the operating member 6 in a direction that moves the elongate hole 67 from the second position to the first position. The first position is the position of the elongate hole 67 when the operating portion 61 is in the first operating position described above, as shown in FIG. 16A. The second position is the position of the elongate hole 67 when the operating portion 61 is in the second operating position described above, as shown in FIG. 16B. The elastic member 80 is positioned inside a groove section 81 provided on the upper surface portion 22 of the housing 2. The groove section 81 is in an arc shape along a circumferential direction of the cover 3. One circumferential direction-end of the groove section 81 is closed, and the other end is open. As shown in FIG. 14, the open end-section of the groove section 81 is closed by a protrusion 82 provided so as to be integral with the annular portion 63. When a user moves the operating portion 61 to cause the operating member 6 to rotate, the protrusion 82 moves along the groove section 81. The distance between the closed end portion of the groove section 81 and the protrusion 82 thereby changes. Specifically, when the operating member 6 rotates so that the elongate hole 67 moves from the first position to the second position, the distance between the closed end portion of the groove section 81 and the protrusion 82 decreases, and the elastic member 80 is compressed (see FIG. 16B).

In the protective device 1 for a vehicle locking device described above, as shown in FIGS. 16A and 16B, when the operating portion 61 is moved from the first operating position to the second operating position when the shutter 4 is in the opened position, the elongate hole 67 moves from the first position to the second position, and one end portion 67a of the elongate hole 67 makes contact with the protrusion 48 on the shutter 4, causing the shutter 4 to rotate. The shutter 4 thereby moves from the opened position to the closed position. When the shutter 4 is in an opened position; i.e., when the elongate hole 67 is in the second position, the elastic member 80 is in a state of being compressed by the protrusion 82, as shown in FIG. 16B. Therefore, when the user releases the operating portion 61, the urging force of the elastic member 80 causes the operating member 6 to rotate so that the elongate hole 67 moves from the second position to the first position. In such an instance, the protrusion 48 on the shutter 4 does not move; only the operating member 6 moves so that the other end portion 67b of the elongate hole 67 approaches the protrusion 48. Therefore, the operating portion 61 returns to the first operating position, while the shutter 4 remains in the closed position, as shown in FIG. 16C. When the magnetic key 95 is used to move the shutter 4 to the opened position, the protective device 1 returns to the state shown in FIG. 16A. The operation when the magnetic key 95 is used to open the shutter 4 is identical to that according to the embodiment described above.

In the protective device 1, the operating portion 61 automatically returns to the original position when the user operates the operating portion 61 to close the shutter 4. The operation for opening the shutter 4 is therefore facilitated.

(b) The material constituting the protective device 1 is not limited to a resin or a metal as described above; another material may be used.

(c) Although the operating portion 61 is provided on the upper surface of the main body portion 62 according to the above embodiment, the operating portion 61 may be provided on a side surface of the main body portion 62.

(d) Although the operating member 6 is provided with a hole 66 and the shutter 4 is provided with the protrusion 48 according to the above embodiment, instead, a protrusion may be provided to the operating member 6 and a hole may be provided to the shutter 4. The configuration is not limited to a combination of a protrusion and a hole; another configuration, in which contact is established to transmit the movement of the operating member 6 to the shutter 4, is also possible.

(e) In the above embodiment, protrusions 28a through 28c, i.e., convex portions, are provided to the outer peripheral surface of the upper surface portion 22 of the housing 2, and concave portions 63a through 63c are provided to the inner peripheral surface of the operating member 6. However, concave portions may be provided to the outer peripheral surface of the upper surface portion 22 of the housing 2, and convex portions may be provided to the inner peripheral surface of the operating member 6.

(f) The holding mechanism 5 is not limited to a configuration involving use of a magnet such as one described above. Another configuration is possible as long as the shutter 4 can be held in the closed position.

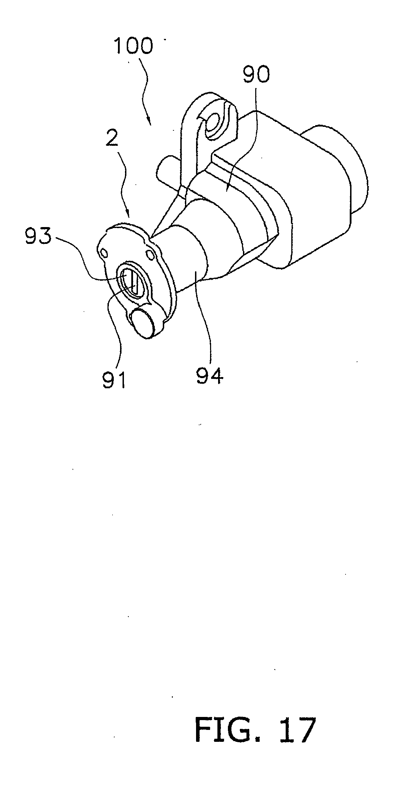

(g) According to the embodiment described above, the housing 2 is formed as a body that is separate from the vehicle locking device 90; however, the housing 2 may be formed so as to be integral with the vehicle locking device 90 as shown in FIG. 17. In such an instance, the housing 2 is formed so as to be integral with the above-described locking device housing 94 of the vehicle locking device 90. In other words, the housing 2 and the locking device housing 94 may each be a portion of the same component.
(h) Examples of a saddle-type vehicle for which the present invention is applied include motorcycles, all-terrain vehicles, and snowmobiles. Motorcycles may be of a moped type, a scooter type, or a sports type.

### [Industrial applicability]

The protective device according to the present invention has a simple configuration including a shutter that is difficult to force open, and is useful.

### EXPLANATION OF THE REFERENCE SYMBOLS

- 1: Protective device
- 2: Housing
- 3: Cover
- 4: Shutter
- 5: Holding mechanism
- 6: Operating member
- 25: Opening of housing
- 33: Opening of cover
- 42: Blocking portion
- 48: Protrusion (second contact portion)
- 61: Operating portion
- 62: Main body portion
- 63a - 63c: Concave portion
- 64: Wall portion
- 66: Hole (first contact portion)
- 67: Elongate hole
- 80: Elastic member (urging member)
- 90: Vehicle locking device
- 201: Main vehicle body
- 202: Front wheel
- 203: Rear wheel

## Claims

1. A protective device (1) for a vehicle locking device (90) including a key hole (91) into which a key is inserted, the protective device (1) comprising:
a housing (2) including an opening (25) on a portion corresponding to the key hole (91);
a cover (3) configured to cover (3) the housing (2), the cover (3) including an opening (33) on a portion corresponding to the opening (25) of the housing (2);
a shutter (4) disposed in a space between the housing (2) and the cover (3), the shutter (4) configured to be moved between a closed position and an opened position, the shutter (4) configured to close the opening (33) of the cover (3) in the closed position, the shutter (4) configured to open the opening (33) of the cover (3) in the opened position;
a holding mechanism (5) configured to hold the shutter (4) in the closed position; and
an operating member (6) provided as a body that is separate from the shutter (4), the operating member (6) configured to rotate along an inner peripheral surface of the cover (3) while making contact with the shutter (4) for moving the shutter (4) from the opened position to the closed position,
**characterized in that**
the cover (3) is a cylindrically shaped member; and
the holding mechanism (5) is configured to directly lock the shutter (4) to the housing (2).

2. The protective device (1) for a vehicle locking device (90) according to Claim 1, wherein the holding mechanism (5) includes:
a plurality of springs (51) and a plurality of lock pins (52),
wherein each of the springs (51) and the lock pins (52) is inserted into depression (27) on a shutter supporting portion (26) of the housing (2), and
wherein, when the shutter (4) is in the closed position, the lock pins (52) are in a state of being inserted into depression (44) on the shutter (4) by the urging force of the springs (51), and
wherein, the lock pins (52) are shorter than the depth of the depression (27) on the housing (2), and longer than the depth of the depression (44) on the shutter (4), and wherein, the lock pins (52) are formed from a magnet such that a magnetic key (95) can release the hold on the shutter (4) maintained by the holding mechanism (5).

3. The protective device (1) for a vehicle locking device (90) according to Claim 1, wherein the operating member (6) includes:
an operating portion protruded outwards from the cover (3); and
a main body portion (62) having an annular shape, the main body portion (62) integrally formed with the operating portion.

4. The protective device (1) for a vehicle locking device (90) according to Claim 3,
wherein
the shutter (4) includes a protrusion,
the operating member (6) includes an elongate hole (67) extended in the circumferential direction of the main body portion (62) for allowing the protrusion to be inserted therein, and the elongate hole (67) is configured to move from a first position to a second position while making contact with the protrusion at an edge thereof in conjunction with rotation of the main body portion (62) for moving the shutter (4) from the opened position to the closed position, and
the protective device (1) further comprises an urging member (80) configured to urge the operating member (6) for moving the elongate hole (67) from the second position to the first position.

5. The protective device (1) for a vehicle locking device (90) according to Claim 3,
wherein the main body portion (62) is rotatably disposed between the inner peripheral surface of the cover (3) and an outer peripheral surface of the housing (2),
the main body portion (62) includes a concave portion (63a-63c) or a convex portion on an inner peripheral surface thereof, and
the concave portion (63a-63c) or the convex portion of the main body portion (62) is configured to make contact with the outer peripheral surface of the housing (2) for restricting movement of the operating member (6).

6. The protective device (1) for a vehicle locking device (90) according to Claim 3, wherein the main body portion (62) includes a wall portion (64) having an arc shape, the wall portion (64) protruded in a direction of a central axis of the main body portion (62), the wall portion (64) disposed along a circumferential direction of the main body portion (62).

7. The protective device (1) for a vehicle locking device (90) according to Claim 3,
wherein the main body portion (62) includes a first contact portion (66) configured to make contact with the shutter (4),
the shutter (4) is configured to rotate for moving between the closed position and the opened position,
the shutter (4) includes a blocking portion configured to close the opening (33) of the cover (3) when the shutter (4) is in the closed position; and a second contact portion configured to make contact with the first contact portion (66), and
a rotational center axis of the shutter (4) is positioned between the blocking portion and the second contact portion.

8. The protective device (1) for a vehicle locking device (90) according to Claim 7, wherein the rotational center axis of the shutter (4) is different from a central axis of the main body portion (62).

9. A vehicle locking mechanism (100) comprising:
the vehicle locking device (90); and
the protective device (1) according to one of Claims 1 to 8.

10. A saddle-type vehicle (200) comprising:
the vehicle locking device (90); and
the protective device (1) according to one of Claims 1 to 8.

## Patentansprüche

1. Eine Schutzvorrichtung (1) für eine Fahrzeugverriegelungsvorrichtung (90), die ein Schlüsselloch (91) umfasst, in das ein Schlüssel eingefügt wird, wobei die Schutzvorrichtung (1) folgende Merkmale aufweist:
ein Gehäuse (2), das eine Öffnung (25) auf einem Abschnitt umfasst, der dem Schlüsselloch (91) entspricht;
eine Abdeckung (3), die konfiguriert ist, um das Gehäuse (2) abzudecken (3), wobei die Abdeckung (3) eine Öffnung (33) auf einem Abschnitt umfasst, der der Öffnung (25) des Gehäuses (2) entspricht;
einen Verschluss (4), der in einem Raum zwischen dem Gehäuse (2) und der Abdeckung (3) angeordnet ist, wobei der Verschluss (4) konfiguriert ist, um zwischen einer geschlossenen Position und einer geöffneten Position bewegt zu werden, wobei der Verschluss (4) konfiguriert ist, um die Öffnung (33) der Abdeckung (3) in der geschlossenen Position zu schließen, wobei der Verschluss (4) konfiguriert ist, um die Öffnung (33) der Abdeckung (3) in der geöffneten Position zu öffnen;
einen Haltemechanismus (5), der konfiguriert ist, um den Verschluss (4) in der geschlossenen Position zu halten; und
ein Betriebsbauglied (6), das als ein Körper vorgesehen ist, der getrennt von dem Verschluss (4) ist, wobei das Betriebsbauglied (6) konfiguriert ist, um sich entlang einer Innenumfangsoberfläche der Abdeckung (3) zu drehen, während es Kontakt mit dem Verschluss (4) herstellt zum Bewegen des Verschlusses (4) von der geöffneten Position zu der geschlossenen Position,
**dadurch gekennzeichnet, dass**
die Abdeckung (3) ein zylindrisch geformtes Bauglied ist; und
der Haltemechanismus (5) konfiguriert ist, um den Verschluss (4) direkt mit dem Gehäuse (2) zu verriegeln.

2. Die Schutzvorrichtung (1) für eine Fahrzeugverriegelungsvorrichtung (90) gemäß Anspruch 1, wobei der Haltemechanismus (5) folgende Merkmale umfasst:
eine Mehrzahl von Federn (51) und eine Mehrzahl von Verriegelungsstiften (52),
wobei jede der Federn (51) und der Verriegelungsstifte (52) in eine Vertiefung (27) auf einem Verschlusstrageabschnitt (26) des Gehäuses (2) eingefügt wird, und
wobei, wenn der Verschluss (4) in der geschlossenen Position ist, die Verriegelungsstifte (52) in einem Zustand sind, in dem dieselben durch die Zugkraft der Federn (51) in eine Vertiefung (44) auf dem Verschluss (4) eingefügt sind, und
wobei die Verriegelungsstifte (52) kürzer sind als die Tiefe der Vertiefung (27) auf dem Gehäuse (2), und länger als die Tiefe der Vertiefung (44) auf dem Verschluss (4), und
wobei die Verriegelungsstifte (52) aus einem Magnet gebildet sind, sodass ein magnetischer Schlüssel (95) den Halt an dem Verschluss (4) lösen kann, der durch den Haltemechanismus (5) ausgeübt wird.

3. Die Schutzvorrichtung (1) für eine Fahrzeugverriegelungsvorrichtung (90) gemäß Anspruch 1, bei der das Betriebsbauglied (6) folgende Merkmale umfasst:
einen Betriebsabschnitt, der von der Abdeckung (3) nach außen vorsteht; und
einen Hauptkörperabschnitt (62), der eine Ringform aufweist, wobei der Hauptkörperabschnitt (62) einstückig mit dem Betriebsabschnitt gebildet ist.

4. Die Schutzvorrichtung (1) für eine Fahrzeugverriegelungsvorrichtung (90) gemäß Anspruch 3, wobei
der Verschluss (4) einen Vorsprung umfasst,
das Betriebsbauglied (6) ein längliches Loch (67) umfasst, das sich in der Umfangsrichtung des Hauptkörperabschnitts (62) erstreckt, um es zu ermöglichen, dass der Vorsprung darin eingefügt wird, und das längliche Loch (67) konfiguriert ist, um sich von einer ersten Position zu einer zweiten Position zu bewegen, während es Kontakt herstellt mit dem Vorsprung an einer Kante desselben in Verbindung mit der Drehung des Hauptkörperabschnitts (62) zum Bewegen des Verschlusses (4) von der geöffneten Position zu der geschlossenen Position, und
die Schutzvorrichtung (1) ferner ein Zugbauglied (80) aufweist, das konfiguriert ist, um das Betriebsbauglied (6) zu ziehen, zum Bewegen des länglichen Lochs (67) von der zweiten Position zu der ersten Position.

5. Die Schutzvorrichtung (1) für eine Fahrzeugverriegelungsvorrichtung (90) gemäß Anspruch 3, wobei der Hauptkörperabschnitt (62) drehbar angeordnet ist zwischen der Innenumfangsoberfläche der Abdeckung (3) und einer Außenumfangsoberfläche des Gehäuses (2),
wobei der Hauptkörperabschnitt (62) einen konkaven Abschnitt (63a - 63c) oder einen konvexen Abschnitt auf einer Innenumfangsoberfläche desselben umfasst, und
der konkave Abschnitt (63a - 63c) oder der konvexe Abschnitt des Hauptkörperabschnitts (62) konfiguriert ist, um Kontakt herzustellen mit der Außenumfangsoberfläche des Gehäuses (2) zum Begrenzen einer Bewegung des Betriebsbauglieds (6).

6. Die Schutzvorrichtung (1) für eine Fahrzeugverriegelungsvorrichtung (90) gemäß Anspruch 3, wobei der Hauptkörperabschnitt (62) einen Wandabschnitt (64) umfasst, der eine Bogenform aufweist, wobei der Wandabschnitt (64) in einer Richtung einer Mittelachse des Hauptkörperabschnitts (62) vorsteht, wobei der Wandabschnitt (64) entlang einer Umfangsrichtung des Hauptkörperabschnitts (62) angeordnet ist.

7. Die Schutzvorrichtung (1) für eine Fahrzeugverriegelungsvorrichtung (90) gemäß Anspruch 3,
wobei der Hauptkörperabschnitt (62) einen ersten Kontaktabschnitt (66) umfasst, der konfiguriert ist, um Kontakt mit dem Verschluss (4) herzustellen,
wobei der Verschluss (4) konfiguriert ist, um sich zu drehen für eine Bewegung zwischen der geschlossenen Position und der geöffneten Position,
wobei der Verschluss (4) einen Sperrabschnitt umfasst, der konfiguriert ist, um die Öffnung (33) der Abdeckung (3) zu schließen, wenn der Verschluss (4) in der geschlossenen Position ist; und einen zweiten Kontaktabschnitt, der konfiguriert ist, um Kontakt mit dem ersten Kontaktabschnitt (66) herzustellen, und
eine Drehmittelachse des Verschlusses (4) die zwischen dem Sperrabschnitt und dem zweiten Kontaktabschnitt positioniert ist.

8. Die Schutzvorrichtung (1) für eine Fahrzeugverriegelungsvorrichtung (90) gemäß Anspruch 7, bei der die Drehmittelachse des Verschlusses (4) sich von einer Mittelachse des Hauptkörperabschnitts (62) unterscheidet.

9. Ein Fahrzeugverriegelungsmechanismus (100), der folgende Merkmale aufweist:
die Fahrzeugverriegelungsvorrichtung (90); und
die Schutzvorrichtung (1) gemäß einem der Ansprüche 1 bis 8.

10. Ein Fahrzeug vom Satteltyp (200), das folgende Merkmale aufweist:
die Fahrzeugverriegelungsvorrichtung (90); und
die Schutzvorrichtung (1) gemäß einem der Ansprüche 1 bis 8.

## Revendications

1. Dispositif protecteur (1) pour un dispositif de verrouillage de véhicule (90) comportant un trou de serrure (91) dans lequel est introduite une clé, le dispositif de protection (1) comprenant:
un boîtier (2) comportant une ouverture (25) dans une partie correspondant au trou de serrure (91);
un couvercle (3) configuré pour couvrir (3) le boîtier (2), le couvercle (3) comportant une ouverture (33) dans une partie correspondant à l'ouverture (25) du boîtier (2);
un obturateur (4) disposé dans un espace entre le boîtier (2) et le couvercle (3), l'obturateur (4) étant configuré pour être déplacé entre une position fermée et une position ouverte, l'obturateur (4) étant configuré pour fermer l'ouverture (33) du couvercle (3) dans la position fermée, l'obturateur (4) étant configuré pour ouvrir l'ouverture (33) du couvercle (3) dans la position ouverte;
un mécanisme de maintien (5) configuré pour maintenir l'obturateur (4) dans la position fermée; et
un élément d'actionnement (6) prévu comme corps qui est séparé de l'obturateur (4), l'élément d'actionnement (6) étant configuré pour tourner le long d'une surface périphérique intérieure du couvercle (3) tout en maintenant un contact avec l'obturateur (4) pour déplacer l'obturateur (4) de la position ouverte à la position fermée,
**caractérisé par le fait que**
le couvercle (3) est un élément de forme cylindrique; et
le mécanisme de maintien (5) est configuré pour verrouiller directement l'obturateur (4) au boîtier (2).

2. Dispositif de protection (1) pour un dispositif de verrouillage de véhicule (90) selon la revendication 1, dans lequel le mécanisme de maintien (5) comporte:
une pluralité de ressorts (51) et une pluralité de goupilles de blocage (52),
dans lequel chacun des ressorts (51) et des goupilles de blocage (52) est introduit dans un creux (27) dans une partie de support d'obturateur (26) du boîtier (2), et
dans lequel, lorsque l'obturateur (4) est en position fermée, les goupilles de blocage (52) sont à même d'être introduites dans le creux (44) dans l'obturateur (4) par la force de poussée des ressorts (51), et
dans lequel goupilles de blocage (52) sont plus courtes que la profondeur du creux (27) dans le boîtier (2) et plus longues que la profondeur d'un creux (44) dans l'obturateur (4), et
dans lequel les goupilles de blocage (52) sont formées d'un aimant, de sorte qu'une clé magnétique (95) puisse libérer le maintien de l'obturateur (4) maintenu par le mécanisme de maintien (5).

3. Dispositif de protection (1) pour un dispositif de verrouillage de véhicule (90) selon la revendication 1, dans lequel l'élément d'actionnement (6) comporte:
une partie d'actionnement ressortant hors du couvercle (3); et
une partie de corps principal (62) présentant une forme annulaire, la partie de corps principal (62) étant formée solidaire de la partie d'actionnement.

4. Dispositif de protection (1) pour un dispositif de verrouillage de véhicule (90) selon la revendication 3,
dans lequel
l'obturateur (4) comporte une saillie,
l'élément d'actionnement (6) comporte un trou oblong (67) s'étendant dans la direction circonférentielle de la partie de corps principal (62) pour permettre d'y introduire la saillie, et le trou oblong (67) est configuré pour se déplacer d'une première position à une deuxième position tout en maintenant le contact avec la saillie à l'un de ses bords conjointement avec la rotation de la partie de corps principal (62) pour déplacer l'obturateur (4) de la position ouverte à la position fermée, et
le dispositif de protection (1) comprend par ailleurs un élément de poussée (80) configuré pour pousser l'élément d'actionnement (6) pour déplacer le trou oblong (67) de la deuxième position à la première position.

5. Dispositif de protection (1) pour un dispositif de verrouillage de véhicule (90) selon la revendication 3,
dans lequel la partie de corps principal (62) est disposée de manière rotative entre la surface périphérique intérieure du couvercle (3) et une surface périphérique extérieure du boîtier (2),
la partie de corps principal (62) comporte une partie concave (63a à 63c) ou une partie convexe sur une surface périphérique intérieure de ce dernier, et
la partie concave (63a à 63c) ou la partie convexe de la partie de corps principal (62) est configurée pour maintenir un contact avec la surface périphérique du boîtier (2) en vue de limiter le déplacement de l'élément d'actionnement (6).

6. Dispositif de protection (1) pour un dispositif de verrouillage de véhicule (90) selon la revendication 3, dans lequel la partie de corps principal (62) comporte une partie de paroi (64) présentant une forme d'arc, la partie de paroi (64) faisant saillie en direction d'un axe central de la partie de corps principal (62), la partie de paroi (64) étant disposée dans une direction circonférentielle de la partie de corps principal (62).

7. Dispositif de protection (1) pour un dispositif de verrouillage de véhicule (90) selon la revendication 3,
dans lequel la partie de corps principal (62) comporte une première partie de contact (66) configurée pour entrer en contact avec l'obturateur (4),
l'obturateur (4) est configuré pour tourner pour se déplacer entre la position fermée et la position ouverte,
l'obturateur (4) comporte une partie de verrouillage configurée pour fermer l'ouverture (33) du couvercle (3) lorsque l'obturateur (4) se trouve en position fermée; et une deuxième partie de contact configurée pour entrer en contact avec la première partie de contact (66), et
un axe central de rotation de l'obturateur (4) est positionné entre la partie de verrouillage et la deuxième partie de contact.

8. Dispositif de protection (1) pour un dispositif de verrouillage de véhicule (90) selon la revendication 7, dans lequel l'axe central de rotation de l'obturateur (4) est différent d'un axe central de la partie de corps principal (62).

9. Mécanisme de verrouillage de véhicule (100) comprenant:
le dispositif de verrouillage de véhicule (90); et
le dispositif de protection (1) selon l'une des revendications 1 à 8.

10. Véhicule de type à selle (200), comprenant:
le dispositif de verrouillage de véhicule (90); et
le dispositif de protection (1) selon l'une des revendications 1 à 8.
